(19) Europäisches Patentamt
European Patent Office
Office européen des brevets

(11) Publication number: **0 171 890 A1**

# (12) EUROPEAN PATENT APPLICATION

(21) Application number: 85304316.4

(22) Date of filing: 17.06.85

(51) Int. Cl.[4]: **A 01 G 9/14**
A 01 G 9/22, A 01 G 13/02

(30) Priority: 18.06.84 US 621383

(43) Date of publication of application: 19.02.86 Bulletin 86/8

(84) Designated Contracting States: AT BE CH DE FR GB IT LI LU NL SE

(71) Applicant: FLORIDA INTERNATIONAL UNIVERSITY
Tamiami Campus
Miami Florida 33199(US)

(72) Inventor: Lee, David W.
256 S.W. 12th Street
Miami Florida 33130(US)

(74) Representative: Bannerman, David Gardner et al,
Withers & Rogers 4 Dyer's Buildings Holborn
London, EC1N 2JT(GB)

## (54) Shade screen.

(57) A shade screen for producing the spectral distribution of radiation of natural shade under foliage is provided. A coloring agent which absorbs radiation in the visible wavelengths and transmits radiation in the infra-red wavelengths and which comprises a pigment or dye or combination of pigments or dyes is applied to or incorporated within a spectrally neutral carrier medium. A spectrally neutral material such as carbon black may be added to the coloring agent to approximate different percentages of light available for photosynthesis. The shade film can be used for cultivating plants having a shady, tropical native habitat, such as ornamental and terrarium plants.

FIG. 2

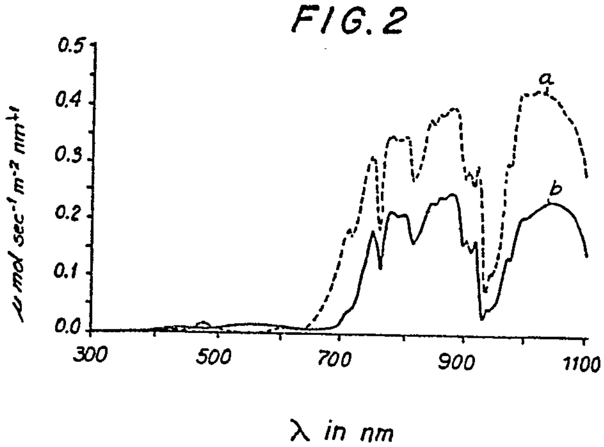


EP 0 171 890 A1

Croydon Printing Company Ltd.

## SHADE SCREEN

## TECHNICAL FIELD

The present invention relates to a screen, film, or cloth for altering the spectral quality of radiation, and more particularly, for producing the spectral quality of the natural light environment of shade under foliage. The use of this invention facilitates the commercial growth of certain plants, such as ornamental or terrarium plants.

## BACKGROUND OF THE INVENTION

The quantity and spectral quality of radiation passing through foliage is altered by the optical properties of leaves. Leaves absorb radiation in the visible wavelengths (400-700 nm), except for some of the green, but reflect and transmit virtually all of the wavelengths above the visible limits, i.e., those in the infra-red range (greater than 700 nm). Thus, natural shade under foliage is deficient in radiation which can be used for photosynthesis (400-700 nm) and is spectrally altered in the wavelengths (650-750 nm) that affect the equilibria of a plant pigment called phytochrome. Phytochrome absorbs radiation in the red region (at a wavelength of about 660 nm) and the far-red region (at a wavelength of about 730 nm) and is thought to be involved in such plant phenomena as flowering,

growth (stem elongation), orientation of leaves and stems to the direction of light (phototropism), sleep movement of leaves (nyctinasty), the orientation of chloroplasts within leaves or cells, and the adaption of the plant to shade. (See Galston, A. W., P. J. Davies and R. L. Satter, The Life of the Green Plant, Chap. 11 (Prentice Hall, Englewood Cliffs, N.J. 1980) and Bidwell, R. G. S. Plant Physiology, at pp. 482 et seq. (MacMillan, New York, N.Y. 1979).)

A means for producing or simulating a shade environment would be of importance in the large-scale commerical production of plants which develop certain characteristics only in shade or grow best in shade. For example, studies have shown that the upper surfaces of some land plants (such as the *Selaginella* species sold in the house plant and terrarium trade) show blue iridescence only when the plants develop beneath shade foliage. (See Hebant and Lee, "Ultrastructural Basis and Developmental Control of Blue Iridescence in *Selaginella* Leaves," Amer. J. Bot., vol. 71(2), pp. 216-219 (1984).) In addition, the native environment of most ornamental plants, including a wide variety of popular house plants, such as *Dieffenbachia* and *Aglaeonema*, are those of a shady tropical environment. Shade is also important in the growth some agricultural crops such as tobacco.

A means for producing or simulating a natural shade environment would also be useful as a tool to document the effect of shade light on plant growth. The effect of shade light has been studied in natural environments. However, in those natural environments, it is difficult to produce a constant amount of light available for photosynthesis or a constant light quality so that the effect of shade light can be analysed. A means for producing a shade

environment would allow change of the quality independent from the quantity of light.

Various films and pigments for modifying the characteristics of natural light are known. See, e.g., U.S. Pat. Nos. 4,170,087; 4,189,866; and 3,857,804; Japanese Pat. Document Nos. 53-38535; 54-68850; 54-97273; 54-105025; 54-127945; 54-160630; 57-36916; 57-38855; 53-12942; 53-20417; 53-27539; 53-27540; 51-01240; 51-74846; and 51-96451.

Some of these documents refer to films or pigments for absorbing UV light for promoting plant growth. See, e.g., Japanese Pat. Document Nos. 51-01240; 54-160630; 54-105025; 54-68850; 53-27540; 53-27539; and 53-12942. Other documents refer to additives for increasing heat retention. See, e.g., U.S. Pat. Nos. 4,170,087 and 3,857,804; Japanese Pat. Document Nos. 51-74846 and 57-36916. Still other of these documents refer to films for controlling pests, weeds, or molds. See, e.g., U.S. Pat. No. 3,857,804 and Japanese Pat. Document Nos. 51-96451; 54-97273; and 53-12942. However, none of the above-mentioned documents refers to a method for altering radiation or sunlight to produce the natural shade environment under foliage.

Two important measurable components of natural shade light are (1) the quantity of light in the visible range (400-700 nm), called photosynthetic photon flux density (PPFD) and (2) the quantum ratios of red to far-red (R:FR) wavelengths.

PPFD is a measure of the quantity of light (as photons) available for photosynthesis and is measured in units of $\mu$ mol $sec^{-1}$ $m^{-2}$. R:FR is a measure of spectral quality and affects phytochrome equilibria. R:FR can be defined as follows:

$$R:FR = \frac{\text{photon fluence rate in 10nm band centered on 660 nm}}{\text{photon fluence rate in 10nm band centered on 730 nm}}$$

(See Smith, H., "Light Quality, Photoperception, and Plant Strategy," Ann. Rev. Plant Physiol., v.33, pp. 481-518 (1982).) Normal sunlight has a R:FR of about 1.30, while the extreme shade of a forest may have a R:FR of as little as 0.20. The high R:FR characteristic of sunlight is easily achieved through the use of fluorescent or mercury vapor lamps. However, only moderately low R:FR (approximately 0.8) can be achieved using low wattage tungsten incandescent lamps. This radiation can be further altered by filters, but the excess infra-red radiation (heat) from high flux densities required to achieve minimal PPFD for photosynthesis requires heat filtration, which limits the size of a growth chamber.

## SUMMARY OF THE INVENTION

It is therefore an object of this invention to provide a means for producing a natural shade environment. According to the present invention, a shade screen for producing the spectral distribution of radiation of natural shade under foliage is provided and comprises (a) a coloring agent which absorbs light in the visible wavelengths and transmits radiation in the infra-red wavelengths and (b) a spectrally neutral medium for carrying the coloring agent. The coloring agent can be applied to or incorporated within the carrier medium. A spectrally neutral component, such as carbon black, can be added to the coloring agent to approximate various percentages of sunlight available for photosynthesis. The density of the coloring agent can also be varied to approximate various degrees of sunlight.

## BRIEF DESCRIPTION OF THE FIGURES

Fig. 1 shows the spectral distribution of radiation between the wavelengths of 300-1100 nm, in

units of μ mol $sec^{-1}$ $m^{-2}$ $nm^{-1}$ for (a) full sunlight and (b) an 83% PPFD spectrally neutral shadecloth.

Fig. 2 shows the spectral distribution of radiation between the wavelengths of 300-1100 nm, in units of μ mol $sec^{-1}$ $m^{-2}$ $nm^{-1}$ (a) under a closed forest canopy and (b) underneath the shade screen of the present invention.

Fig. 3 shows the absorbance spectra of (a) CI Pigment Violet 23 and (b) CI Disperse Yellow 64, both (a) and (b) in a urethane varnish base applied on cellulose acetate.

Fig. 4 shows the relationship between R:FR and percentage of full sunlight under (a) a closed forest canopy and (b) varying densities of the shade film of the present invention.

DETAILED DESCRIPTION OF THE INVENTION

In order to design and construct a screen, film, or paint with the necessary optical properties for producing a natural shade environment, it is necessary to determine the relationship between shading (percentage of PPFD) and the spectral quality of radiation (R:FR). The spectral quality of radiation does not change when only the percentage of PPFD (shading) is varied, i.e., the spectral quality, measured in terms of R:FR, is identical to the spectral quality of full sunlight for all percentages of spectrally neutral shading. An example of this is shown in Fig. 1, which shows the spectral distribution of radiation between the wavelengths of 300-1100 nm, in units of μ mol $sec^{-1}$ $m^{-2}$ $nm^{-1}$, for (a) full sunlight and (b) an 83% PPFD spectrally neutral shadecloth. Such a shadecloth is spectrally neutral because it absorbs or transmits radiation equally at all wavelengths.

The present invention provides a coloring agent, comprising a pigment or dye or a combination

of various pigments or dyes which, when applied to or incorporated within a film, produces the optical properties or spectral distribution of radiation filtered through foliage. Fig. 2 shows the spectral distribution of radiation in (a) a natural shade environment and (b) under the shade screen of the present invention. From Fig. 2, it can be seen that the spectral distribution of natural shade can be produced by the shade screen of the present invention. The coloring agent must have strong absorption in the visible wavelengths (400-700 nm) and be transparent in the infra-red range (above 700 nm). In addition, a spectrally neutral material, such as carbon black, may be a component of the coloring agent to approximate various percentages of PPFD.

In a preferred embodiment of the invention, the coloring agent is a mixture of CI (Colour Index) Pigment Violet 23 and CI Disperse Yellow 64, together with carbon black. Violet 23 has the following structural formula:

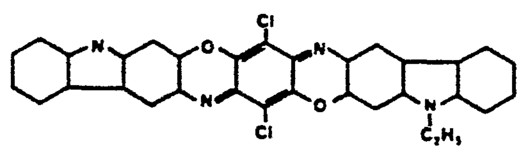

As shown in Fig. 3, Violet 23 absorbs strongly in the green to red wavelengths (having two overlapping peaks at 600-630 nm and 510-590 nm), with a window of transmission in the blue (400-500 nm) and transmittance above 650 nm. Yellow 64 has the following formula:

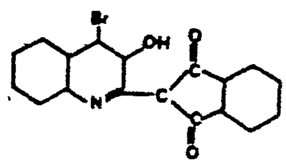

As shown in Fig. 3, Yellow 64 is transparent above 500 nm but absorbs strongly at wavelengths less than

500 nm. Yellow 64 thus absorbs at the blue wavelengths transmitted by Violet 23. As can be seen in Fig. 2, a shade screen incorporating the combination of Violet 23 and Yellow 64 produces a spectral distribution very close to that of the natural shade of a forest canopy, i.e., with radiation being absorbed in the visible wavelengths and transmitted in the infrared wavelengths. In addition, the components of this coloring agent are extremely stable to heat and light.

The coloring agent can be applied to or incorporated within a carrier medium to create a shade screen which can be used to cover a growth chamber. As used herein, the general term for the combination of coloring agent and carrier medium is "shade screen." When the coloring agent is applied to the surface of or incorporated within a transparent or spectrally neutral carrier medium in the form of a sheet the shade screen will be referred to as a shade film. When the coloring agent is incorporated into a filament and woven, the resulting shade screen will be referred to as a shade cloth. In one embodiment, the coloring agent is mixed into a urethane varnish base and sprayed onto sheets of cellulose acetate. In another embodiment, the coloring agent is incorporated into a film, such as polyvinylchloride. In still another embodiment, the coloring agent is incorporated within a plastic polymer for making a filament for weaving a shade cloth. These films or cloths can be used in a greenhouse to effect a natural shade environment. Alternatively, the coloring agent can be sprayed onto small plastic bags to alter the spectral quality of radiation reaching a small area of a plant, such as one leaf. The screen can also be used to alter the spectral quality of cool tungsten lamps used in measurements of photosynthesis, producing radiation

close to that of natural conditions for measuring the photosynthetic responses of extreme shade plants.

The proportions of the various pigments or dyes depends on the amount of radiation needed for photosynthesis. In the preferred embodiment described above, a decrease in Yellow 64 would give a higher percentage of energy available for photosynthesis. In addition, the amount of carbon black can be varied to produce various percentages of PPFD. A reduction in the proportion of carbon black in the screen as described in the preferred embodiment would produce a lower R:FR at the same percentage shade. Various thicknesses or densities of the sheets, films, or cloths can also be used to vary the percentage of PPFD.

EXAMPLE 1

A coloring agent for producing a natural shade environment was formulated by combining (1) 1 part Hostaperm Violet B pigment (CI Pigment Violet 23); (2) 0.25 part Solvaperm Yellow G dye (CI Disperse Yellow 64) (both obtained from American Hoechst, Inc., Coventry, Rhode Island 02816); and (3) 0.40 part carbon black pigment. This mixture was combined with a urethane varnish base in a concentration of 10% w/v and sprayed on 22 x 28 cm sheets of cellulose acetate.

Sheets having various coloring agent densities were prepared, i.e., with varying thicknesses or coats of coloring agent applied. Fig. 4 shows a comparison of measurements of % PPFD versus R:FR for various locations underneath tree canopies and underneath varying densities of shade film. The relationship between R:FR and % PPFD for the natural shade canopy and the shade film is very similar. In both the canopy and film, the shade light is characterized

by decreasing R:FR in relationship to decreasing percentages of full sunlight.

A Licor 1800 spectroradiometer (Licor Instruments, Lincoln, Nebraska 68504) with a wavelength response of 300-1100 nm and a half peak bandwidth of 6 nm was employed for all measurements. Spectra were recorded at intervals of 2 nm. Quantum integration of each scan at 400-700 nm gave PPFD in $\mu$ mol $sec^{-1}$ $m^{-2}$. Quantum ratios (658-662/728-732 nm) gave R:FR.

EXAMPLE 2

The shade film as produced in Example 1 was used to grow plants of the peacock fern (Selaginella uncinata Spr.). In their natural habitat, these plants produce a striking iridescent blue foliage, but in typical greenhouse conditions produce green leaves. These plants, especially the blue-leaved forms, have commerical value as items in the house plant trade.

The peacock ferns were grown in 28 cm cubical containers under sunlight. The internal environments were of constantly high (approximately 90%) relative humidity in a temperature range of 22-28°C. The plants were grown in potting soil mixed with vermiculite, and fertilized monthly for 6 months with 1/4 strength Peters fertilizer. The containers allowed passage of approximately 15 $\mu$ mol $sec^{-1}$ $m^{-2}$ of PPFD. One group of plants was filtered with flat black urethane varnish sprayed onto a cellulose acetate sheet, providing the spectral quality of full sunlight (R:FR=1.30). The other group of plants was filtered by the shade film of the present invention as described in Example 1, giving spectrally altered radiation with R:FR=0.35. Plants grown in the spectrally altered environment produced prostrate shoots with the iridescent blue foliage. Plants

grown in the control (spectrally unaltered) environment grew upright and produced green foliage. In reciprocal transplants, new growth responded to the new light environments. These results were uniformly observed in growth trials of 30 plants during six months of testing.

Other modifications and variations will be apparent to those skilled in the art and the claims are intended to cover all such modifications and variations that fall within the true spirit and scope of the invention.

I claim:

1. A shade screen for producing the spectral distribution of radiation of natural shade under foliage comprising:

(a) a coloring agent which absorbs radiation in the visible wavelengths but transmits radiation in the infra-red wavelengths and

(b) a spectrally neutral medium for carrying the coloring agent.

2. The shade screen of claim 1 wherein the coloring agent comprises a pigment which absorbs light in the visible range except in the blue wavelengths and is transparent in the infra-red wavelengths and a dye which absorbs light in the blue wavelengths and is transparent in the green to infra-red wavelengths.

3. The shade screen of claim 2 further comprising carbon black.

4. The shade screen of claim 3 wherein the pigment is CI Pigment Violet 23 and the dye is CI Disperse Yellow 64.

5. The shade screen of claim 4 wherein the CI Pigment Violet 23, the CI Disperse Yellow 64, and the carbon black are mixed in the approximate proportion of 1 part to 0.25 part to 0.40 part, respectively.

6. The shade screen of claim 1 wherein the coloring agent is applied as a coating to the carrier medium.

7. The shade screen of claim 1 wherein the coloring agent is incorporated within the carrier medium.

8. The shade screen of claim 1 wherein the coloring agent is incorporated into a filament as the carrier medium for weaving into a cloth.

9. A method for making a shade screen for producing the spectral distribution of radiation of natural shade under foliage comprising the steps of:

(a) mixing a coloring agent which absorbs radiation in the visible range but transmits radiation in the infra-red range with a spectrally neutral liquid and

(b) applying the liquid to a spectrally neutral carrier medium.

10. The method of claim 9 wherein the carrier medium is cellulose acetate.

11. A method for making a shade screen for producing the spectral distribution of radiation of natural shade under foliage comprising incorporating a coloring agent which absorbs radiation in the visible range but transmits radiation in the infra-red range into a spectrally neutral carrier medium.

12. The method of claim 11 wherein the carrier medium is a filament for weaving into a shade cloth.

13. The method of claim 11 wherein the carrier medium is polyvinylchloride.

14. A method for making a shade screen for duplicating the spectral distribution of radiation of natural shade under foliage comprising the steps of:

(a) mixing CI Pigment Violet 23, CI Disperse Yellow 64, and carbon black in the approximate proportion of 1 part to 0.25 part to 0.40 part, respectively, to form a coloring agent;

(b) combining the coloring agent of step (a) with a urethane varnish in a concentration of approximately 10% w/v; and

(c) spraying the combination from step (b) onto sheets of cellulose acetate.

0171890

FIG. 1

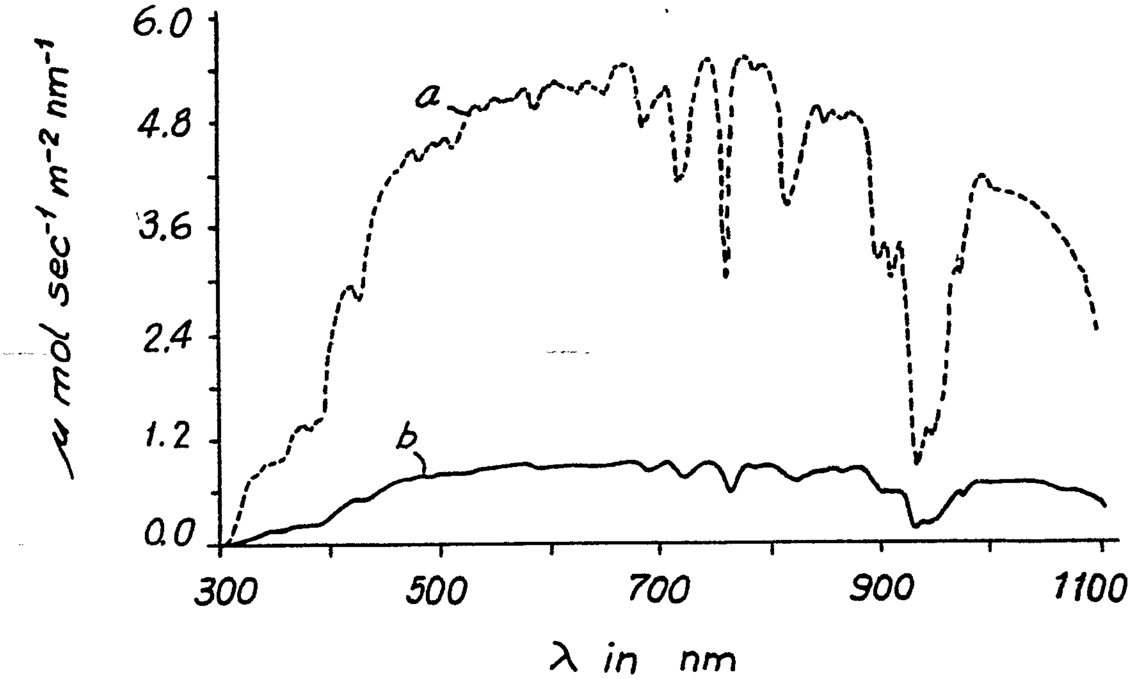


FIG. 2

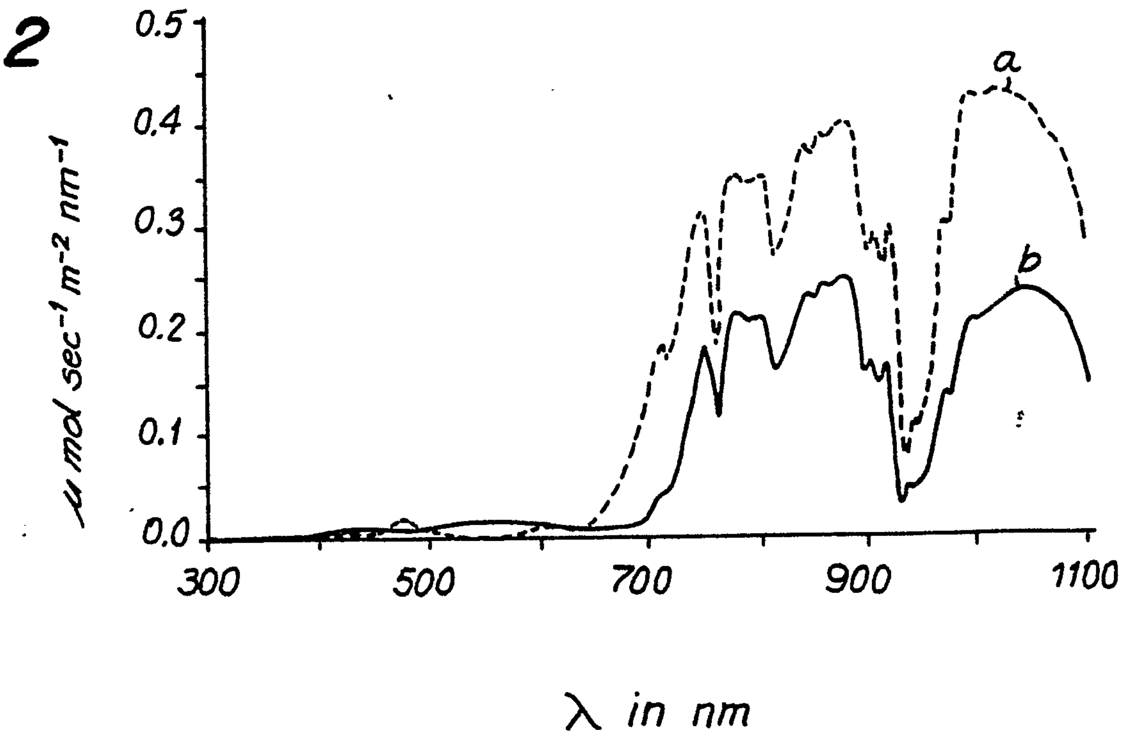

FIG.3

0171890

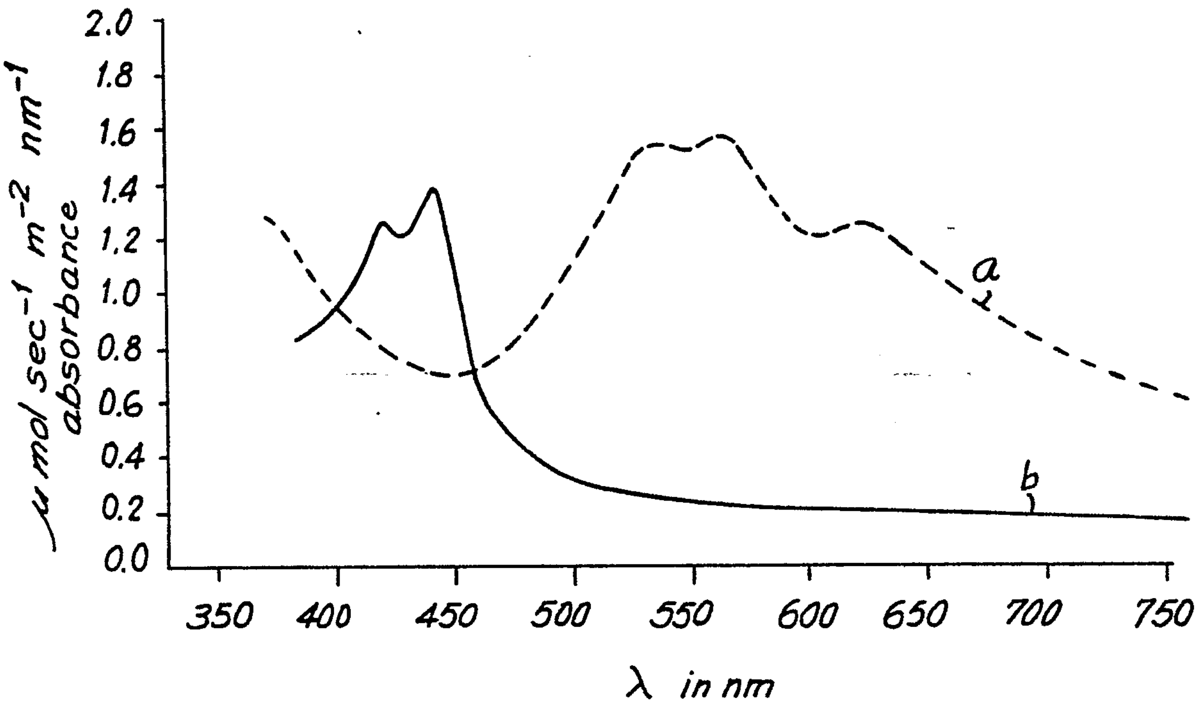


FIG.4

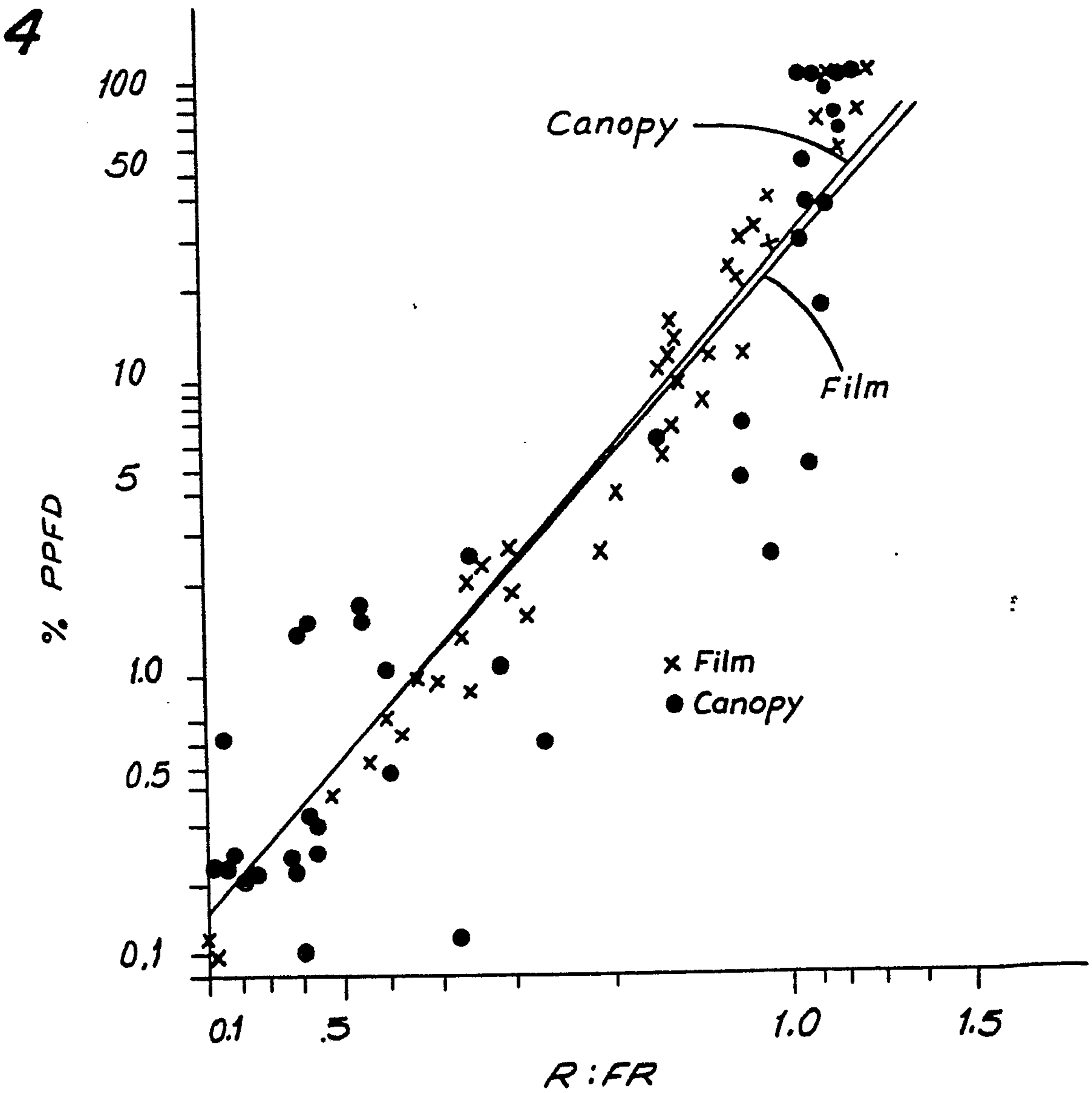

European Patent Office

# EUROPEAN SEARCH REPORT

0171890

Application number

EP 85 30 4316

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | AT-B- 293 779 (MONTECATINI EDISON S.P.A.) * page 3, lines 8-19; claims * | 2 | A 01 G 9/14<br>A 01 G 9/22<br>A 01 G 13/02 |
| A | | 4 | |
| | --- | | |
| X | DE-B-1 247 738 (PECHINEY-PROGIL) * column 4, lines 19-29; claims; figure * | 1 | |
| Y | | 2 | |
| A | | 3 | |
| | --- | | TECHNICAL FIELDS SEARCHED (Int. Cl.4) |
| A | DD-A- 79 397 (O. SCHNEIDER) * complete document * | 1,2 | |
| | --- | | |
| A | AT-B- 276 841 (MONTECATINI EDISON S.P.A.) * page 5, last line - page 7, last line * | 1,2,4 | A 01 G 9/00<br>A 01 G 13/00<br>C 08 K 5/00 |
| | --- | | |
| D,A | US-A-3 857 804 (F. GLATTI et al.) * column 5, line 62 - column 6, line 23 * | 1 | |
| | ----- | | |

The present search report has been drawn up for all claims

| Place of search | Date of completion of the search | Examiner |
|---|---|---|
| BERLIN | 10-09-1985 | WUNDERLICH J E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO Form 1503. 03.82